# EUROPÄISCHE PATENTSCHRIFT

(11) **EP 3 613 288 B1**
(45) Veröffentlichungstag und Bekanntmachung des Hinweises auf die Patenterteilung: **29.09.2021**
(21) Anmeldenummer: 19189988.9
(22) Anmeldetag: 05.08.2019
(51) Int. Cl.: A21B 3/13, A21B 7/00

(54) **TEIGBEARBEITUNGSVERFAHREN UNTER VERWENDUNG EINER MEHRZAHL VON TEIGLING-FORMEN SOWIE TEIGBEARBEITUNGSANLAGE ZUM DURCHFÜHREN DES VERFAHRENS**
DOUGH PROCESSING METHOD USING A PLURALITY OF DOUGH MOULDS AND DOUGH PROCESSING SYSTEM FOR CARRYING OUT THE METHOD
PROCÉDÉ DE TRAITEMENT DE LA PÂTE UTILISANT UNE PLURALITÉ DE MOULES À PÂTON AINSI QU'INSTALLATION DE TRAITEMENT DE LA PÂTE DESTINÉE À LA MISE EN OEUVRE DUDIT PROCÉDÉ

(30) Priorität: 20.08.2018 DE 102018213963
(43) Veröffentlichungstag der Anmeldung: 26.02.2020
(73) Patentinhaber: Werner & Pfleiderer Industrielle Backtechnik GmbH, 71732 Tamm (DE)
(72) Erfinder: Stocklossa, Klaus, 71672 Marbach - Rielingshausen (DE)
(74) Vertreter: Rau, Schneck & Hübner Patentanwälte Rechtsanwälte PartGmbB

(56) Entgegenhaltungen:
- EP-A1- 0 770 328
- EP-A1- 1 474 984
- EP-A1- 3 502 569
- WO-A1-2004/036999
- WO-A1-2016/053932
- WO-A1-2018/193348
- DE-A1- 2 246 214
- DE-A1-102014 100 104
- DE-U- 7 321 895

## Beschreibung

Die Erfindung betrifft ein Teigbearbeitungsverfahren unter Verwendung einer Mehrzahl von Teigling-Formen und eine Teigbearbeitungsanlage zum Durchführen eines derartigen Teigbearbeitungsverfahrens.

Teigbearbeitungsanlagen, in denen Teigling-Formen zur Aufnahme mindestens eines Teiglings während eines Gär- und Backvorgangs zum Einsatz kommen, sind durch offenkundige Vorbenutzung beispielsweise der Anmelderin bekannt.

Die DE 10 2014 100 104 A1 offenbart Garzubehör für ein Gargerät, ein Gargerät sowie Verfahren zur Bewegungserkennung. Die WO 2016/053932 A1 beschreibt Formen zur Aufnahme von Lebensmittelprodukten. Die DE 2 246 214 A offenbart ein Verfahren und eine Vorrichtung zur Herstellung von Backwaren. Die EP 0 770 328 A1 offenbart ein Verfahren zur Bestimmung eines Typs eines Teigling-Trays sowie eine Teigbearbeitungsanlage hierfür. Die WO 2004/036999 A1 offenbart Varianten von Teigling-Aufnahmen. Die EP 3 502 569 A1 offenbart ein Verfahren und eine Vorrichtung zur Optimierung eines Backvorgangs. Die WO 2018/193348 A1 offenbart eine Pizzateigling-Aufnahme. Die DE 73 21 895 U offenbart eine Vorrichtung zur Aufnahme von Gär- und Backformen. Die EP 1 474 984 A1 offenbart eine Teig-Kastenform.

Eine Aufgabe der Erfindung ist es, ein Teigbearbeitungsverfahren anzugeben, bei dem Teigling-Formen mit Identifizierungsmarken, enthaltend Identifikationsdaten einschließlich Formtypdaten und Individualisierungsdaten, mit besonderen Vorteilen genutzt werden können, sowie eine dieses Teigbearbeitungsverfahren durchführende Teigbearbeitungsanlage.

Diese weitere Aufgabe ist erfindungsgemäß gelöst durch ein Teigbearbeitungsverfahren mit den in Anspruch 1 angegebenen Verfahrensschritten.

Bei diesem Verfahren kann eine oben diskutierte Teigling-Form zum Einsatz kommen.

Eine Formtyp-Identifikation ermöglicht bei der Durchführung des Teigbearbeitungsverfahrens eine typenabhängige Ansteuerung von Bearbeitungsstationen, die die einzelnen Verfahrensschritte durchführen. Dies kann beispielsweise zu einem formtypenabhängigen Vorbereiten und/oder zu einem formtypenabhängigen Bestücken und/oder zu einem formtypenabhängigen Gären und/oder zu einem formtypenabhängigen Backen und/oder zu einem formtypenabhängigen Entnehmen und/oder zu einem formtypenabhängigen Überführen genutzt werden. Es ist dann immer gewährleistet, dass unabhängig davon, ob zwischen den Bearbeitungsschritten Teigling-Formen beispielsweise manuell entnommen oder ausgetauscht werden, jeweils der formtypenabhängig angepasste Bearbeitungsschritt durchgeführt wird. Eine Individual-Identifikation der Teigling-Formen ermöglicht es zudem bei der Durchführung des Teigbearbeitungsverfahrens, einer bestimmten Teigling-Form bestimmte Daten zuzuordnen, beispielsweise die mit dieser Teigling-Form durchgeführte Anzahl von Bearbeitungszyklen und/oder Besonderheiten der jeweiligen Teigling-Form, beispielsweise festgestellte Beschädigungen und/oder ein festgestellter Sonderbetriebszustand, beispielsweise erfasste Restmengen von unerwünscht anhaftendem Teig. Dies kann bei der Durchführung des Teigbearbeitungsverfahrens zu einer individuellen Behandlung bestimmter Teigling-Formen genutzt werden, beispielsweise zu einem Ausschleusen nach einer bestimmten Anzahl durchgeführter Bearbeitungszyklen und/oder einem Ausschleusen bei Feststellung einer Beschädigung und/oder zum Ausschleusen bei Feststellung des Vorliegens eines Sonderbetriebszustandes.

Im Rahmen einer Wartung nach Erreichen einer bestimmten Anzahl an Bearbeitungszyklen können die Teigling-Formen beispielsweise neu lackiert werden.

Zum Teigbearbeitungsverfahren gehören
- eine bildgebenden Überwachung der Teigling-Formen unmittelbar nach dem Bestücken der Teigling-Formen und vor dem Gären der Teiglinge und/oder
- eine bildgebenden Überwachung der Teigling-Formen unmittelbar vor dem Gären der Teiglinge und/oder
- eine bildgebenden Überwachung der Teigling-Formen unmittelbar nach dem Entnehmen der Teiglinge.

Eine derartige bildgebende Überwachung der Teigling-Form ermöglicht ein Erkennen eines Sonderbetriebszustandes der Teigling-Form ggf. einschließlich der diese bestückenden Teiglinge. Eine bildgebende Überwachung nach dem Bestücken ermöglicht das Erfassen eines Sonderbetriebszustandes, beispielsweise das unerwünschte Bestücken einer Teigling-Aufnahme mit zwei Teiglingen oder eine Fehlablage eines Teiglings, welcher dann nicht korrekt in der Teigling-Aufnahme zu liegen kommt. Eine bildgebende Überwachung unmittelbar vor dem Gären ermöglicht es, den Einfluss eines Förderweges zwischen dem Bestücken und einer Gärvorrichtung festzustellen. Eine bildgebende Überwachung nach dem Entnehmen der Teiglinge aus der Teigling-Form ermöglicht die Feststellung, ob unerwünschte Teiglingreste in der Teigling-Form verblieben sind. Anstelle einer bildgebenden Überwachung kann auch eine Volumenermittlung optischer Messwerte mithilfe eines Sensors zum Einsatz kommen. Im Rahmen einer solchen Ermittlung kann ein Vergleich mit einem Standardvolumen mit einem Minimal-Toleranzwert einerseits und einem Maximal-Toleranzwert andererseits erfolgen. Mithilfe einer derartigen bildgebenden Überwachung bzw. Volumenermittlung aus optischen Messwerten kann eines der folgenden Überwachungsergebnisse ausgegeben werden:
- Volumen OK, .d.h. Volumenwert innerhalb der Toleranzwerte;
- Volumen zu klein, Teigling in der Form vorhanden;
- Volumen zu klein, kein Teigling in der Form vorhanden;
- Volumen zu groß; sowie
- genügend Teiglinge in einem Verbund aus mehreren zugeordneten Teigling-Formen eingelegt.

Dieses letzte Überwachungsergebnis kann im Zusammenhang mit einer Mehrfachmessung durch bildgebende Überwachung bzw. Volumenermittlung aus optischen Messwerten und einer entsprechenden Kombination der Messergebnisse folgen.

Grundsätzlich kann das Teigbearbeitungsverfahren auch ohne einen Backschritt durchgeführt werden. In diesem Fall können Teigling-Formen genutzt werden, die ausschließlich für einen Gärbetrieb zum Einsatz kommen.

Die Vorteile einer Formtypen-Identifikation bei den verschiedenen Bearbeitungsvarianten nach Anspruch 2 entsprechen denjenigen, die vorstehend schon beschrieben wurden. Beim Bestücken kann beispielsweise auf eine Anzahl von Teigling-Aufnahmen des jeweiligen Formtyps und/oder auf ein formtypabhängiges Teiglinggewicht reagiert werden. Entsprechendes gilt für das Backen, wo ein Backprogramm formtypenabhängig eingestellt werden kann. Entsprechendes gilt bei der formtypenabhängigen Teigling-Entnahme sowie beim formtypenabhängigen Überführen der Teigling-Formen.

Die Vorteile einer Individual-Identifikation bei den verschiedenen Bearbeitungsvarianten nach Anspruch 3 entsprechen ebenfalls denjenigen, die vorstehend bereits erläutert wurden. Eine Individual-Identifikation vor dem Gären ermöglicht beispielsweise eine Individualzuordnung einer Teigling-Form, bei der beim Bestücken ein Sonderbetriebszustand aufgetreten ist. Entsprechendes gilt bei einer Individual-Identifikation nach dem Entnehmen, bei der ein Sonderbetriebszustand der individuellen Teigling-Form festgestellt und zugeordnet werden kann. Entsprechendes gilt bei einer Individual-Identifikation vor dem Einschleusen der Teigling-Form in ein Formenlager, wo der Teigling-Form im Formenlager dann ein entsprechender Datensatz, beispielsweise enthaltend die mit dieser Teigling-Form bereits durchgeführte Zykluszahl, zugeordnet werden kann. Auch beispielsweise Wartungsintervalle können in einem solchen Datensatz hinterlegt werden.

Zum Durchführen des Teigbearbeitungsverfahrens und zur Gewährleistung einer Qualitätskontrolle bei gleichzeitig hohem und energieeffizientem Teigling-Durchsatz kommt eine Teigling-Form zur Aufnahme mindestens eines Teiglings während des Gär- und Backvorgangs zum Einsatz
- mit mindestens einer maschinenlesbaren Identifizierungsmarke, enthaltend Identifikationsdaten, zu denen Formtypdaten und für die jeweilige Teigling-Form eindeutige Individualisierungsdaten gehören,
- wobei die Identifizierungsmarke einen keramikhaltigen Träger aufweist.

Eine Identifizierungsmarke mit einem keramikhaltigen Träger bietet die Möglichkeit, die Teigling-Formen während der Durchführung eines Teigbearbeitungsverfahrens einschließlich eines Gär- und Backvorgangs zu identifizieren. Dies kann zur Steuerung von Bearbeitungsstationen der Teigbearbeitungsanlage, bei der die Teigling-Formen zum Einsatz kommen, genutzt werden. Die Identifizierungsmarke mit dem keramikhaltigen Träger gewährleistet, dass weder tiefe Temperaturen und/oder hohe Luftfeuchtigkeit beim Gären noch hohe Temperaturen beim Backen zu einer unerwünschten Degradation der Identifizierungsmarke führen. Der Träger der Identifizierungsmarke kann aus einem Stahl-Keramik-Verbundmaterial gefertigt sein. Die Identifikationsdaten der Identifizierungsmarke können durch Lasergravur oder durch Thermotransferdruck aufgebracht sein.

Eine Keramikbeschichtung des Trägers nach Anspruch 5 ermöglicht eine kostengünstige Fertigung der Identifizierungsmarke der Teigling-Form. Auf der Keramikschicht können die Identifikationsdaten aufgebracht werden.

Ein QR-Code nach Anspruch 6 ermöglicht ein kostengünstiges automatisiertes Erfassen der Identifikationsdaten mithilfe einer entsprechenden Leseeinrichtung bzw. eines Scanners. Der QR-Code kann so gestaltet sein, dass der Lesevorgang eine gewisse Fehlerredundanz hat, sodass eine gewisse Beeinträchtigung der Identifikationsdaten beispielsweise durch Verschleiß oder durch Verschmutzung toleriert werden kann.

Die Vorteile einer Teigbearbeitungsanlage nach Anspruch 7 entsprechen denen, die vorstehend unter Bezugnahme auf das erfindungsgemäße Teigverarbeitungsverfahren bereits erläutert wurden.

Formtyp-Leseeinrichtungen können zwischen der Form-Vorbereitungsvorrichtung und der Bestückungsvorrichtung, können zwischen der Gärvorrichtung und dem Backofen, können zwischen dem Backofen und der Entnahmevorrichtung und können auch zwischen der Entnahmevorrichtung der Überführungsvorrichtung vorgesehen sein. Individual-Leseeinrichtungen können nach der Bestückungsvorrichtung und vor der Gärvorrichtung, können nach der Gärvorrichtung und vor dem Backofen, können nach der Entnahmevorrichtung und vor der Überführungsvorrichtung, können nach einer Weiche nach der Entnahmevorrichtung und können auch vor einer Einschleuseeinheit in ein Formenlager vorgesehen sein.

Teil der Bestückungsvorrichtung kann eine Bestreuvorrichtung zum Bestreuen des Teiglings mit Mehl oder Körnern sein.

Die Gärvorrichtung kann in eine Vorgäreinrichtung und eine Nachgäreinrichtung unterteilt sein.

Die bildgebende Überwachung nach dem Bestücken kann insbesondere sicherstellen, dass die Teigling-Form nicht unerwünscht unterfüllt ist, also zu wenig Teiglinge aufweist.

Ein bildgebender Überwachungssensor bzw. ein Sensor zur Volumenermittlung aus optischen Messwerten kann auch unmittelbar vor der Gärvorrichtung und kann auch unmittelbar nach der Entnahmevorrichtung vorgesehen sein.

Als bildgebender Überwachungssensor kann ein 3D-Vision-Sensor bzw. ein Sensor zur Volumenermittlung aus optischen Messwerten zum Einsatz kommen.

Als Leseeinrichtung insbesondere zum Lesen der Formtyp-Identifikation und/oder zum Lesen der Individual-Identifikation kann ein 2D-Scanner oder eine sonstige Leseeinrichtung für einen Identifikationscode zum Einsatz kommen.

Eine Steuerung der Teigbearbeitungsanlage kann als Kopfsteuerung ausgeführt sein. Jede Bearbeitungsstation kann dann beispielsweise mit einer zugordneten Steuerungseinheit kommunizieren. Zusätzlich können die Steuerungseinheiten der verschiedenen Bearbeitungsstationen der Teigbearbeitungsanlage untereinander kommunizieren.

Mit der Teigbearbeitungsanlage können vorgegebene Bearbeitungsabläufe, sogenannte Bearbeitungsjobs, insbesondere sequenziell bearbeitet werden. Innerhalb eines Bearbeitungsjobs kann dann genau ein Formentyp zum Einsatz kommen. Bei der Durchführung des Teigbearbeitungsverfahrens kann ein Wechsel zwischen verschiedenen derartigen Bearbeitungsjobs automatisiert erfolgen.

Eine Mehrzahl von Teigling-Formen nach Anspruch 8 ermöglichen einen effizienten Betrieb der Teigbearbeitungsanlage mit hohem Teiglingdurchsatz. Es können mehrere Formensätze mit unterschiedlichen Formtypen gleichzeitig in der Teigbearbeitungsanlage zum Einsatz kommen. Dabei ist nicht erforderlich, dass die Teigbearbeitungsanlage sortenrein, also mit ausschließlich Teigling-Formen des gleichen Formentyps betrieben wird.

Es ist auch möglich, die Teigbearbeitungsanlage gleichzeitig mit verschiedenen Formtypen zu betreiben. Es ist insbesondere ein chaotischer Betrieb möglich.

Ein Ausführungsbeispiel der Erfindung wird nachfolgend anhand der Zeichnungen näher erläutert. In dieser zeigen:
- Fig. 1: perspektivisch schräg von oben eine Teigling-Form zur Aufnahme mindestens eines Teiglings während eines Gär- und Backvorgangs innerhalb einer Teigbearbeitungsanlage;
- Fig. 2: eine Ausschnittsvergrößerung in einer Seitenansicht gemäß Blickrichtung II in Fig. 1, welche eine Identifizierungsmarke der Teigling-Form näher zeigt;
- Fig. 3 bis 5: in zur Fig. 2 ähnlicher Darstellung weitere Teigling-Formen anderer Formtypen, die ebenfalls Teiglinge während eines in der Teigbearbeitungsanlage durchgeführten Gär- und Backvorgangs aufnehmen, wiederum mit deren Identifizierungsmarken;
- Fig. 6: eine Aufsicht auf eine Identifizierungsmarke, die bei den Formtypen der Teigling-Formen nach den Fig. 2 bis 5 zum Einsatz kommen kann; und
- Fig. 7: ein Ablaufschema eines Teigbearbeitungsverfahrens, welches mit der Teigbearbeitungsanlage durchgeführt wird unter Verwendung einer Mehrzahl derartiger Teigling-Formen unterschiedlicher Formtypen, wobei ein Förderkreislauf der Teigling-Form innerhalb des gesamten Teigbearbeitungsverfahrens gezeigt ist.

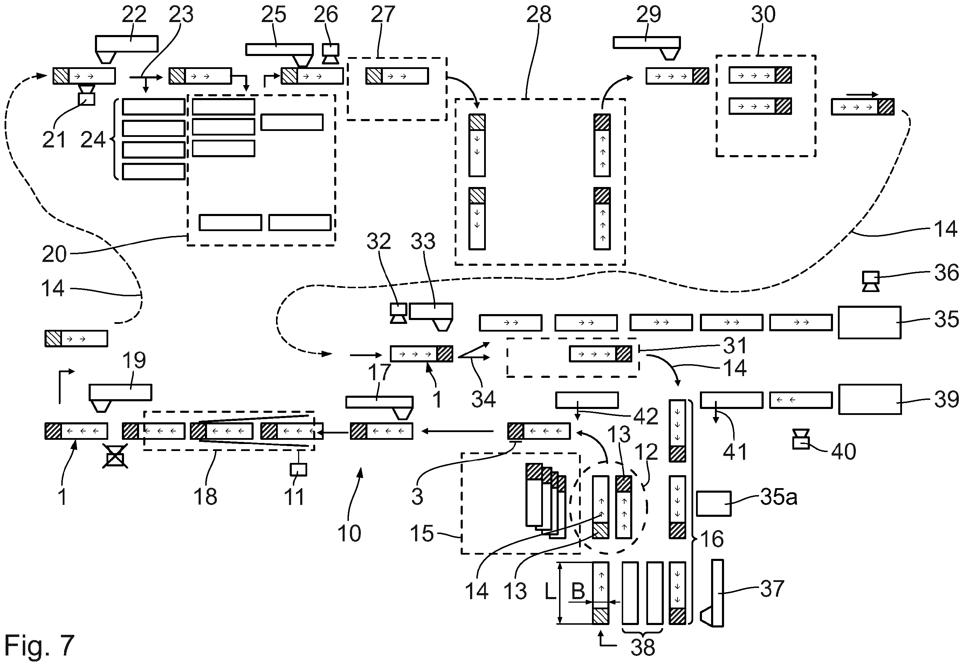

Eine Teigling-Form 1 dient zur Aufnahme mindestens eines Teiglings während eines Gär- und Backvorgangs eines Teigbearbeitungsverfahrens, welches anhand eines Teigling-Form-Kreislaufs schematisch in der Fig. 7 dargestellt ist. Die Teigling-Form 1 dient zur Aufnahme von insgesamt zehn nicht dargestellten Teiglingen. Je nach Typ der mit dem Verfahren zu bearbeitenden Teiglinge sind in der Teigbearbeitungsanlage verschiedene Typen von Teigling-Formen vorgesehen, die auch als Formtypen bezeichnet werden.

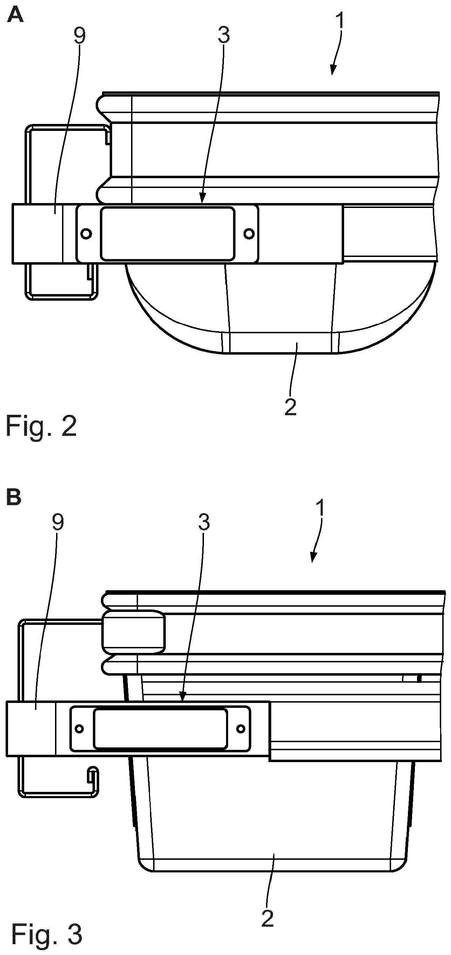

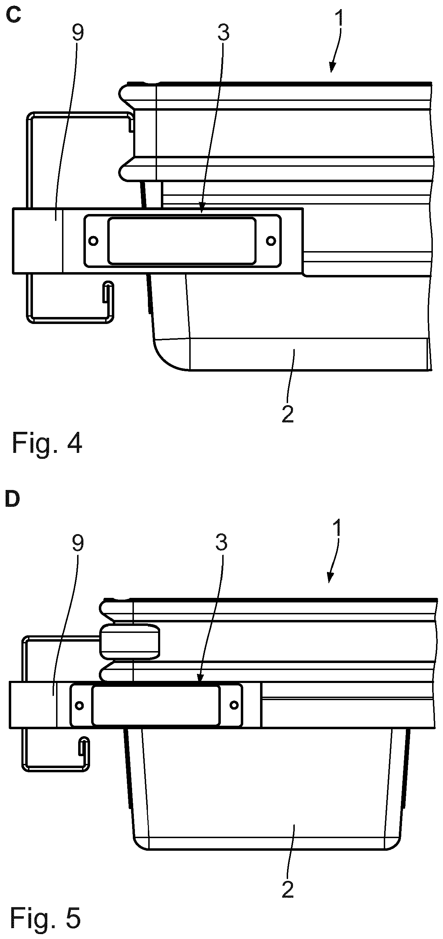

Die ausschnittsweisen Seitenansichten der Fig. 2 bis 5 geben Beispiele derartiger Formtypen. Die Formtypen unterscheiden sich in der Ausformung von Teigling-Aufnahmen 2 sowie in ihrer Breite B (vgl. die Fig. 7, die die Teigling-Formen 1 jeweils in einer Aufsicht und vereinfachend ohne Größenunterschiede zeigt, Breite B ist beispielsweise in der Fig. 7 unten angedeutet). Eine Länge L der verschiedenen Formtypen kann gleich sein.

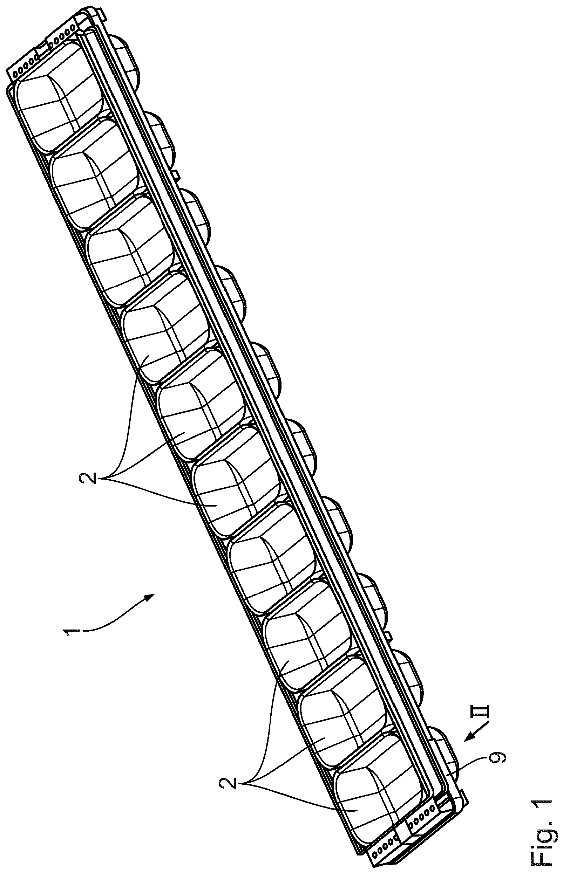

Die Anzahl der Teigling-Aufnahmen 2 der jeweiligen Teigling-Form 1 kann zwischen eins und zwanzig liegen. Die Teigling-Aufnahmen 2 können wie bei der Teigling-Form 1 nach Fig. 1 einreihig oder auch mehrreihig längs der Länge L der jeweiligen Teigling-Form 1 aufgereiht sein. Die verschiedenen Formtypen sind in den Fig. 2 bis 5 mit A, B, C und D bezeichnet.

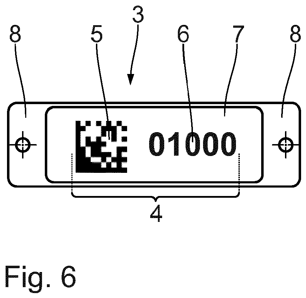

Jede der Teigling-Formen 1 hat mindestens eine maschinenlesbare Identifizierungsmarke 3, die in den Fig. 1 bis 5 schematisch und in der Fig. 6 beispielhaft stärker im Detail dargestellt ist. Die Identifizierungsmarke 3 trägt Identifikationsdaten 4. Zu diesen Identifikationsdaten gehören Formtypendaten 5 und für die jeweilige Teigling-Form 1 eindeutige Individualisierungsdaten 6. Beim Ausführungsbeispiel der Identifizierungsmarken 3 nach Fig. 6 sind die Formtypdaten 5 als zweidimensionaler QR-Code und die Individualisierungsdaten 6 als fünfstellige alphanumerische Zahl ausgeführt. Die Identifikationsdaten 4 können entsprechend mit einem QR-Scanner und/oder mit einem bildgebendem Sensor ausgelesen werden. Die Identifizierungsmarke 3 hat einen keramikhaltigen Träger 7. Der Träger 7 kann aus einem Stahl-Keramik-Verbundmaterial ausgeführt sein. Die Identifikationsdaten sind auf einer Keramikbeschichtung des Trägers 7 aufgebracht. Die Identifikationsdaten können mittels Lasergravur oder mittels Thermotransferdruck aufgebracht sein.

Die Identifikationsmarke 3 weist zudem gegenüberliegende Halteabschnitte 8 auf, mittels denen die Identifikationsmarke 3 an einem Formträger 9 der jeweiligen Teigling-Form 1 befestigt werden kann. Dies kann mithilfe einer Verschraubung, mithilfe einer Vernietung und/oder mithilfe einer Verklebung erfolgen. Die Befestigung der Identifikationsmarke 3 am Formträger 9 kann durch Formschluss erfolgen. Die Identifikationsmarke kann zum Beispiel biegsame Flügel aus plastischem Material, z.B. aus Metallblech, aufweisen, die um entsprechende Haltelemente des Formträgers herumgebogen werden.

Bei der Durchführung des Teigbearbeitungsverfahrens in einer hinsichtlich des Teigling-Form-Kreislaufs in der Fig. 7 dargestellten Teigbearbeitungsanlage 10 werden die zu gärenden und zu backenden Teiglinge zunächst in einer Teig-Vorbereitungsvorrichtung 11, wie in der Fig. 7 schematisch dargestellt, vorbereitet. Die Teig-Vorbereitungsvorrichtung 11 kann einen Mixer, einen Kneter, einen Teigteiler, einen Vorportionierer, einen Wirker und eine Waage beinhalten, was in der Fig. 7 nicht näher dargestellt ist.

Parallel hierzu werden die zu bestückenden Teigling-Formen 1 in einer Form-Vorbereitungsvorrichtung 12 vorbereitet.

Ein Identifizierungsabschnitt 13 der jeweiligen Teigling-Form 1 ist in der Aufsicht nach Fig. 7 jeweils durch ein separates Rechteck hervorgehoben. Dieser Identifizierungsabschnitt 13 kann in einer Form-Förderrichtung 14, die in der Fig. 7 durch Richtungspfeile innerhalb der jeweiligen Teigling-Form 1 oder auch zwischen den Teigling-Formen 1 wiedergegeben ist, führend und/oder folgend angeordnet sein.

Die Förderung der Teigling-Formen 1 längs der Form-Förderrichtung 14 erfolgt automatisch über motorisierte Fördereinheiten.

Die Form-Vorbereitungsvorrichtung 12 kann Teigling-Formen 1, die direkt von einem gerade durchlaufenen Gär- und Backvorgang zurückkommen, gleich wieder zur Bestückung mit Teiglingen einschleusen oder entscheidet darüber, ob derartige zurückkommende Teigling-Formen zunächst in einem Formenlager 15 zwischengelagert werden. Innerhalb des Formenlagers 15 können die Formentypen A bis D sortenrein in separaten Lagerabschnitten gelagert werden. Zur Vorbereitung der zu bestückenden Teigling-Form 1 kann dann die Form-Vorbereitungsvorrichtung 12 einen Formtyp, der von einer Kopfsteuerung der Teigbearbeitungsanlage 10 angefordert wird, entweder direkt aus dem Rücklauf entnehmen oder aus dem Formenlager 15.

Ein entsprechender Rücklaufabschnitt ist in der Fig. 7 bei 16 dargestellt. Der Rücklaufabschnitt 16 ist Teil einer Überführungsvorrichtung zum Überführen der Teigling-Formen 1 zur erneuten Bestückungs-Vorbereitung.

Teil des Vorbereitens der zu bestückenden Teigling-Form 1 ist eine Formtyp-Identifikation vor dem Bestücken der Teigling-Form 1 mit den vorbereiteten Teiglingen. Diese erste Formtyp-Identifikation findet mittels einer ersten Formtyp-Leseeinrichtung 17 statt, die als Scanner ausgeführt ist und die Formtypendaten 5 der jeweiligen Teigling-Form 1 ausliest und der Steuerung der Teigbearbeitungsanlage 10 zur Verfügung stellt.

Anschließend erfolgt in einer Teiglinie 18 der Teigbearbeitungsanlage 10 ein Bestücken der identifizierten Teigling-Form 1 mit den in der Teig-Vorbereitungsvorrichtung 11 vorbereiteten Teiglingen. Hierbei nutzt die Teiglinie 18 Formtypinformationen, die ihr von der ersten Formtyp-Leseeinrichtung 17 zugespielt werden. Die Teiglinie 18 ist also eine Bestückungsvorrichtung.

Nach Durchlaufen der Teiglinie 18 passieren die bestückten Teigling-Formen 1 einen ersten bildgebenden Überwachungssensor 19 zur Überwachung der Qualität der Bestückung der jeweiligen Teigling-Form 1. Hierbei wird überwacht, ob die Teigling-Form 1 entsprechend einer Steuerungsvorgabe für die Teiglinie 18 vollständig bestückt ist. Zudem wird überwacht, ob unerwünscht in einer der Teigling-Aufnahme 2 zwei oder mehr Teiglinge vorliegen. Weiterhin wird überwacht, ob der Teigling in der Teigling-Aufnahme 2 unerwünscht zu hoch ist. Schließlich wird überwacht, ob die richtige Teiglinggröße in der bestückten Teigling-Aufnahme 2 vorliegt. Die Teigling-Formen 1, die die Maßstäbe der Qualitätskontrolle des ersten bildgebenden Überwachungssensors 19 nicht erfüllen, können unmittelbar ausgeschleust bzw. von Hand nachbestückt werden.

Anstelle des ersten bildgebenden Überwachungssensors 19 und/oder anstelle der weiteren, nachfolgend noch beschriebenen bildgebenden Überwachungssensoren können Sensoren treten, bei denen eine Volumenermittlung aus optischen Messwerten erfolgt. Die Funktionalität eines derartigen Volumenermittlungs-Sensors entspricht derjenigen eines bildgebenden Überwachungssensors.

Die bestückten Teigling-Formen durchlaufen anschließend eine Förderstrecke bis vor eine Gärvorrichtung 20 der Teigbearbeitungsanlage 10. Im Förderweg unmittelbar vor der Gärvorrichtung 20 passieren die Teigling-Formen 1 eine erste Individual-Leseeinrichtung 21 zum Lesen der Individualisierungsdaten 6, also zum Lesen einer Individual-Identifikation der Teigling-Form 1. Die erste Individual-Leseeinrichtung 21 kommuniziert mit der Steuerung der Teigbearbeitungsanlage 10 unter anderem zur Dokumentation einer Zyklusanzahl der individuellen Teigling-Form 1. Zudem können beim Leseprozess durch die erste Individual-Leseeinrichtung 21 Informationen zu dieser individuellen Teigling-Form 1 innerhalb der Teigbearbeitungsanlage 10 zusammengeführt werden, z.B. ein Reparaturbedarf oder ein sonstiger Fehler dieser individuellen Teigling-Form 1.

Benachbart zur Position der ersten Individual-Leseeinrichtung 21 ist ein zweiter bildgebender Überwachungssensor 22 der Teigbearbeitungsanlage 10 angeordnet, dessen Aufgaben denjenigen des ersten bildgebenden Überwachungssensor vergleichbar sind. Hierüber kann kontrolliert werden, ob sich während des Förderwegs zwischen der Teiglinie 18 und der Gärvorrichtung 20 eine Veränderung hinsichtlich der Teigling-Form 1 bzw. deren Teigling-Bestückung ergeben hat.

Nach Passieren der ersten Individual-Leseeinrichtung 21 und des zweiten bildgebenden Überwachungssensors 22 werden diejenigen Teigling-Formen 1, die entsprechend des Lese- bzw. Überwachungsergebnisses nicht den nachfolgenden Gär- und Backvorgang durchlaufen sollen, in einer Weiche 23 ausgeschleust. Die Identifikation der über die Weiche 23 ausgeschleusten Teigling-Formen 1 erfolgt mithilfe der Individualisierungsdaten, die über die erste Individual-Leseeinrichtung 21 erfasst wurden. Derart ausgeschleuste Teigling-Formen 1 sind in der Fig. 7 bei 24 beispielhaft dargestellt. Diese ausgeschleusten Teigling-Formen 24 können dann beispielsweise einer Wartung bzw. Reparatur zugeführt werden.

Die nicht in der Weiche 23 ausgeschleusten Teigling-Formen 1 durchlaufen nun einen Gärschritt in der Gärvorrichtung 20. Nach den Gärvorgang passieren die Teigling-Formen 1 eine zweite Formtyp-Leseeinrichtung 25 und benachbart hierzu eine zweite Individual-Leseeinrichtung 26. Die Funktion dieser beiden Leseeinrichtungen 25, 26 entspricht derjenigen, die vorstehend unter Bezugnahme auf die Leseeinrichtungen 17 und 21 erläutert wurde.

Die Teigling-Formen 1 durchlaufen anschließend eine Bedeckler-Einheit 27. Mithilfe eines weiteren bildgebenden Überwachungssensors nach Art der Sensoren 19, 22, der in der Fig. 7 nicht dargestellt ist, kann die Korrektheit eines Bedeckelns der jeweiligen Teigling-Form 1 überprüft werden und ggf. wiederum eine Korrektur eines nicht erfolgreichen Bedecklungsvorgangs erfolgen.

In der Bedeckler-Einheit 27 erhält jede der durchlaufenden Teigling-Formen 1, für die dies mit der Steuerung der Teigbearbeitungsanlage 10 vorgegeben ist, einen Formendeckel, sodass die in den Teigling-Aufnahmen 2 aufgenommenen Teiglinge allseitig umschlossen sind. Es können also alle Teigling-Formen 1 entsprechende Formendeckel erhalten oder es können auch nur diejenigen Teigling-Formen 1 Formendeckel erhalten, für die dies aufgrund einer entsprechenden Produktplanung über die Steuerung so vorgegeben ist.

Hierbei nutzt die Bedeckler-Einheit 27 die Formtypinformationen, die ihr von der zweiten Formtyp-Leseeinrichtung 25 zugespielt werden.

Soweit die Teigling-Form 1 in der Bedeckler-Einheit 27 nicht korrekt bedeckelt wurde, wird dieses Ergebnis mit den Individualisierungsdaten der zugehörigen Teigling-Form 1 verknüpft, die der Bedeckler-Einheit 27 über die zweite Individual-Leseeinrichtung 26 zugespielt werden.

Die ggf. bedeckelten Teigling-Formen 1 durchlaufen anschließend einen Backofen 28 der Teigbearbeitungsanlage 10. Hierbei kann es sich um einen Durchlauf-Backofen, insbesondere um einen Tunnelofen handeln. Bei dem Tunnelofen kann es sich um einen Ofen mit mehreren Durchlauf-Backräumen handeln, die insbesondere mehrstöckig übereinander angeordnet sind. Der Backofen 28 ist für den kontinuierlichen Durchlauf-Backbetrieb, also nicht nur für einen Chargen-Betrieb, ausgelegt. Der Backofen 28 kann als Wärmequelle über einen Gasbrenner, über Thermoöl oder auch elektrisch betrieben werden.

Die Darstellung des Kreislauf-Förderweges der jeweiligen Teigling-Formen 1 bezieht sich, soweit nachfolgend nicht explizit etwas anderes beschrieben ist, auf den Förderkreislauf, der zu genau einem Durchlauf-Backraum des Backofens 28 gehört.

Nach dem Backen der Teiglinge im Backofen 28 passieren die Teigling-Formen 1 eine dritte Formtyp-Leseeinrichtung 29, deren Funktion derjenigen der Formtyp-Leseeinrichtung 17 und 25 entspricht. Die noch heißen Teigling-Formen, die eine Temperatur von mehr als 100 °C noch aufweisen können, durchlaufen dann eine Entkapsler-Einheit 30. In der Entkapsler-Einheit 30 werden, soweit vorhanden, die Formdeckel von den Teigling-Formen 1 abgenommen. Hierzu nutzt die Entkapsler-Einheit 30 die Formtypdaten, die ihr von der dritten Formtyp-Leseeinrichtung 29 zugespielt werden. In der Entkapsler-Einheit 30 findet zudem eine Entnahme der gebackenen Teiglinge aus den Teigling-Aufnahmen 2 der jeweiligen Teigling-Form 1 statt. Bei der Entkapsler-Einheit 30 handelt es sich also auch um eine Entnahmevorrichtung zum Entnehmen aus den Teigling-Formen 1. Die entnommenen, gebackenen Teiglinge werden gekühlt, gruppiert, abtransportiert und schließlich verpackt.

Nach dem Durchlaufen der Entkapsler-Einheit 30 wird die jeweilige Teigling-Form 1 hin zu einer als Kühltunnel ausgeführten Kühleinrichtung 31 weitergefördert.

Vor der Kühleinrichtung 31 passiert die jeweilige Teigling-Form 1 eine dritte Individual-Leseeinrichtung 32 und einen dritten bildgebenden Überwachungssensor 33. Die Funktion der dritten Individual-Leseeinrichtung 32 entspricht derjenigen der Individual-Leseeinrichtungen 21 und 26. Mit dem dritten bildgebenden Überwachungssensor 33 wird überprüft, ob die Teiglinge aus den Teigling-Aufnahmen 2 der jeweiligen Teigling-Form 1 ausreichend rückstandsfrei entnommen wurden.

Teigling-Formen 1, bei denen die Überwachung im dritten bildgebenden Überwachungssensor 33 ergibt, das dort noch unerwünschte Teiglingreste vorliegen, werden über eine weitere Weiche 34 hin zu einer Reinigungsstation 35 ausgeschleust. Dort findet mittels einer vierten Individual-Leseeinrichtung 36 wiederum ein Lesen der Identifikationsdaten 4 der jeweils ausgeschleusten Teigling-Form 1 statt.

Mit der Weiche 34 nicht ausgeschleuste Teigling-Formen 1 durchlaufen die Kühleinrichtung 31 und erreichen im Anschluss hieran den Rücklaufabschnitt 16, sodass der Förderkreislauf der Teigling-Formen 1 geschlossen ist. Im Rücklaufabschnitt 16 findet über eine Reinigungseinheit 35a eine Reinigung der Teigling-Formen 1 einschließlich der Identifizierungsmarken 3 statt. Zudem durchlaufen die Teigling-Formen 1 im Rücklaufabschnitt 16 eine vierte Formtyp-Leseeinrichtung 37. Zwischen dem Rücklaufabschnitt 16 und der Form-Vorbereitungsvorrichtung 12 hat die Teigbearbeitungsanlage 10 noch eine Stapeleinrichtung 38 für die Teigling-Formen 1. Die Stapeleinrichtung 38 und das Formenlager 15 arbeiten mit den Formtypdaten, die über die vierte Formtyp-Leseeinrichtung 37 bereitgestellt werden.

Zum Förderweg der Teigling-Formen 1 gehört zusätzlich noch eine Einschleuseinrichtung 39 für neue und/oder wiederaufbereitete Teigling-Formen 1 für alle Formkreisläufe der verschiedenen Durchlauf-Backräume des Backofens 28. Nach dem Einschleusen mittels der Einschleuseinrichtung 39 durchlaufen die eingeschleusten Teigling-Formen 1 eine fünfte Individual-Leseeinrichtung 40. Letztere arbeitet mit einer Weiche zusammen, über die entschieden wird, welchen Formkreislauf, also zu welchem Durchlauf-Backraum die jeweilige Teigling-Form gehört. Abhängig vom Leseergebnis der fünften Individual-Leseeinrichtung 40 werden die wiedereingeschleusten Teigling-Formen 1 entweder über eine Weiche 41 einem nicht dargestellten Formenlager eines anderen Formkreislaufs oder über eine Weiche 42 dem Formenlager 15 des in der Fig. 7 dargestellten Formenkreislaufs zugeführt. Das Formenlager 15 arbeitet bei der Auswahl des Lagerortes der wiedereingeschleusten Teigling-Form 1 mit den Lesedaten der fünften Individual-Leseeinrichtung 40.

## Patentansprüche

1. Teigbearbeitungsverfahren unter Verwendung einer Mehrzahl von Teigling-Formen (1) zur Aufnahme mindestens eines Teiglings, wobei jede der Teigling-Formen (1) mindestens eine maschinenlesbare Identifizierungsmarke (3), enthaltend Identifikationsdaten (4), zu denen Formtypdaten (5) und für die jeweilige Teigling-Form (1) eindeutige Individualisierungsdaten (6) gehören, aufweist, wobei die Teigling-Formen in einer Teigbearbeitungsanlage zum Einsatz kommen, mit folgenden automatisierten Schritten:
- Vorbereiten zu gärender und zu backender Teiglinge,
- Vorbereiten der zu bestückenden Teigling-Formen (1),
- Bestücken der Teigling-Formen (1) mit jeweils mindestens einem vorbereiteten Teigling,
- Gären der Teiglinge in den Teigling-Formen (1) in der Teigbearbeitungsanlage,
- Backen der Teiglinge in den Teigling-Formen (1) in der Teigbearbeitungsanlage,
- Entnehmen der gebackenen Teiglinge aus den Teigling-Formen (1),
- Überführen der Teigling-Formen (1) zur erneuten Bestückungs-Vorbereitung der Teigling-Formen (1),
- wobei ab einschließlich dem Schritt des Vorbereitens der zu bestückenden Teigling-Formen (1) bis zur erneuten Bestückungs-Vorbereitung der Teigling-Formen (1) jeweils einmal folgende Identifikationen durchgeführt werden:
-- Formtyp-Identifikation der Teigling-Form (1),
-- Individual-Identifikation der Teigling-Form (1),
- wobei die Identifikationen zur Steuerung von Bearbeitungsstationen der Teigbearbeitungsanlage genutzt werden,
mit
- einer bildgebenden Überwachung der Teigling-Formen (1) unmittelbar nach dem Bestücken der Teigling-Formen (1) und vor dem Gären der Teiglinge und/oder
- einer bildgebenden Überwachung der Teigling-Formen (1) unmittelbar vor dem Gären der Teiglinge und/oder
- einer bildgebenden Überwachung der Teigling-Formen (1) unmittelbar nach dem Entnehmen der Teiglinge.

2. Teigbearbeitungsverfahren nach Anspruch 1, **dadurch gekennzeichnet, dass**
- eine Formtyp-Identifikation nach dem Vorbereiten und vor dem Bestücken der Teigling-Formen (1) erfolgt und/oder
- eine Formtyp-Identifikation nach dem Gären und vor dem Backen der Teiglinge erfolgt und/oder
- eine Formtyp-Identifikation nach dem Backen und vor dem Entnehmen der Teiglinge erfolgt und/oder
- eine Formtyp-Identifikation nach dem Entnehmen der Teiglinge und vor dem Überführen der Teigling-Formen (1) erfolgt.

3. Teigbearbeitungsverfahren nach Anspruch 1 oder 2, **dadurch gekennzeichnet, dass**
- eine Individual-Identifikation nach dem Bestücken der Teigling-Formen (1) und vor dem Gären der Teiglinge erfolgt und/oder
- eine Individual-Identifikation nach dem Gären und vor dem Backen der Teiglinge erfolgt und/oder
- eine Individual-Identifikation nach dem Entnehmen der Teiglinge und vor dem Überführen der Teigling-Formen (1) erfolgt und/oder
- eine Individual-Identifikation nach dem Ausschleusen der Teigling-Formen (1) nach dem Entnehmen der Teiglinge erfolgt und/oder
- eine Individual-Identifikation vor einem Einschleusen der Teigling-Formen (1) in ein Formenlager (15) erfolgt, aus dem zu bestückende Teigling-Formen (1) entnommen und in welches Teigling-Formen (1) nach dem Entnehmen gebackener Teiglinge eingelagert werden.

4. Teigbearbeitungsverfahren nach einem der Ansprüche 1 bis 3,
**dadurch gekennzeichnet, dass** Teigling-Formen verwendet werden, deren Identifizierungsmarken (3) einen keramikhaltigen Träger (7) aufweisen.

5. Teigbearbeitungsverfahren nach Anspruch 4, **dadurch gekennzeichnet, dass** Teigling-Formen zum Einsatz kommen, deren Träger (7) eine Keramikbeschichtung aufweist.

6. Teigbearbeitungsverfahren nach einem der Ansprüche 1 bis 5,
**dadurch gekennzeichnet, dass** Teigling-Formen verwendet werden, deren Identifikationsdaten (4) einen QR-Code umfassen.

7. Teigbearbeitungsanlage (10) zum Durchführen eines Verfahrens nach einem der Ansprüche 1 bis 6
- mit einer Form-Vorbereitungsvorrichtung (12) zum Vorbereiten von zu bestückenden Teigling-Formen (1),
- mit einer Bestückungsvorrichtung (18) zum Bestücken der Teigling-Formen (1) mit jeweils mindestens einem vorbereiteten Teigling,
- mit einer Gärvorrichtung (20) zum Gären der Teiglinge in den Teigling-Formen (1),
- mit einem Backofen (28) zum Backen der Teiglinge in den Teigling-Formen (1),
- mit einer Entnahmevorrichtung (30) zum Entnehmen der gebackenen Teiglinge aus den Teigling-Formen (1),
- mit einer Überführungsvorrichtung zum Überführen der Teigling-Formen (1) zur erneuten Bestückungs-Vorbereitung der Teigling-Formen (1),
- mit mindestens einer Formtyp-Leseeinrichtung (17, 25, 29, 37) zum Lesen einer Formtyp-Identifikation einer Teigling-Form (1),
- mit mindestens einer Individual-Leseeinrichtung (21, 26, 32, 36, 40) zum Lesen einer Individual-Identifikation der Teigling-Formen (1),
- mit mindestens einen bildgebenden Überwachungssensor (19, 22, 33) zur Überwachung der Teigling-Formen (1) unmittelbar nach dem Bestücken mit den Teiglingen und vor dem Gären der Teiglinge.

8. Teigbearbeitungsanlage nach Anspruch 7, **gekennzeichnet durch** eine Mehrzahl von Teigling-Formen (1) zur Aufnahme mindestens eines Teiglings während eines Gär- und Backvorgangs, wobei jede der Teigling-Formen (1) mindestens eine maschinenlesbare Identifizierungsmarke (3), enthaltend Identifikationsdaten (4) zu denen die Formtypdaten (5) und die für die jeweilige Form eindeutigen Individualisierungsdaten (6) gehören, aufweist.

## Claims

1. Dough processing method using a plurality of dough piece molds (1) configured to receive at least one dough piece, each of the dough piece molds (1) having at least one machine-readable identification label (3) containing identification data (4), which include mold type data (5) and unambiguous individualization data (6) for the respective dough piece mold (1), the dough piece molds being used in a dough processing installation, comprising the following automated steps:
- preparing dough pieces to be fermented and baked,
- preparing the dough piece molds (1) to be filled,
- filling the dough piece molds (1) with in each case at least one prepared dough piece,
- fermenting the dough pieces in the dough piece molds (1) in the dough processing installation,
- baking the dough pieces in the dough piece molds (1) in the dough processing machine,
- removing the baked dough pieces from the dough piece molds (1),
- transferring the dough piece molds (1) to a refilling preparation of the dough piece molds (1),
- wherein starting from and including the step of preparing the dough piece molds (1) to be filled up to the refilling preparation of the dough piece molds (1), the following identifications are each carried out once:
-- mold type identification of the dough piece mold (1),
-- individual identification of the dough piece mold (1),
- wherein the identifications are used to control processing stations of the dough processing installation,
with
- an imaging monitoring of the dough piece molds (1) immediately after filling the dough piece molds (1) and prior to fermenting the dough pieces and/or
- an imaging monitoring of the dough piece molds (1) immediately prior to fermenting the dough pieces and/or
- an imaging monitoring of the dough piece molds (1) immediately after removing the dough pieces.

2. Dough processing method as claimed in claim 1, **characterized in that**
- a mold type identification is carried out after preparing and prior to filling the dough piece molds (1) and/or
- a mold type identification is carried out after fermenting and prior to baking of the dough pieces and/or
- a mold type identification is carried out after baking and prior to removing the dough pieces and/or
- a mold type identification is carried out after removing the dough pieces and prior to transferring the dough piece molds (1).

3. Dough processing method as claimed in claim 1 or 2, **characterized in that**
- an individual identification is carried out after filling the dough piece molds (1) and prior to fermenting the dough pieces and/or
- an individual identification is carried out after fermenting and prior to baking of the dough pieces and/or
- an individual identification is carried out after removing the dough pieces and prior to transferring the dough piece molds (1) and/or
- an individual identification is carried out after discarding the dough piece molds (1) after removing the dough pieces and/or
- an individual identification is carried out prior to feeding the dough piece molds (1) to a mold storage (15) from which dough piece molds (1) to be filled are removed and in which dough piece molds (1) are stored after removing baked dough pieces.

4. Dough processing method as claimed in any one of claims 1 to 3, **characterized in that** dough piece molds are used, the identification labels (3) of which comprise a ceramic-based carrier (7).

5. Dough processing method as claimed in claim 4, **characterized in that** dough piece molds are used, the carrier (7) of which has a ceramic coating.

6. Dough processing method as claimed in any one of claims 1 to 5, **characterized in that** dough piece molds are used whose identification data (4) comprise a QR code.

7. Dough processing installation (10) configured to perform a method as claimed in one of the claims 1 to 6
- with a mold preparation device (12) for preparing dough piece molds (1) to be filled,
- with a filling device (18) for filling the dough piece molds (1) with in each case at least one prepared dough piece,
- with a fermenting device (20) for fermenting the dough pieces in the dough piece molds (1),
- with a baking oven (28) for baking the dough pieces in the dough piece molds (1),
- with a removal device (30) for removing the baked dough pieces from the dough piece molds (1),
- with a transfer device for transferring the dough piece molds (1) to a refilling preparation of the dough piece molds (1),
- with at least one mold type reading unit (17, 25, 29, 37) for reading a mold type identification of a dough piece mold (1),
- with at least one individual reading unit (21, 26, 32, 36, 40) for reading an individual identification of the dough piece molds (1),
- with at least one imaging monitoring sensor (19, 22, 33) for monitoring the dough piece molds (1) immediately after being filled with the dough pieces and prior to fermenting of the dough pieces.

8. Dough processing installation as claimed in claim 7, **characterized by** a plurality of dough piece molds (1) for receiving at least one dough piece during a fermentation and baking process, each of the dough piece molds (1) having at least one machine-readable identification label (3) containing identification data (4), which include mold type data (5) and unambiguous individualization data (6) for the respective mold.

## Revendications

1. Procédé de traitement de la pâte utilisant une pluralité de moules à pâtons (1) pour recevoir au moins un pâton, chacun desdits moules à pâtons (1) ayant au moins une marque d'identification (3) lisible par machine, contenant des données d'identification (4) comprenant des données de type de moule (5) et des données d'individualisation (6) uniques au moule à pâtons (1) respectif, lesdits moules à pâtons étant utilisés dans une installation de traitement de la pâte, comprenant les étapes automatisées suivantes :
- préparation de la pâte à fermenter et à cuire,
- préparation des moules à pâtons (1) à remplir,
- remplissage des moules à pâtons (1) d'au moins un pâton préparé,
- fermentation des pâtons dans les moules à pâtons (1) dans l'installation de traitement de la pâte,
- cuisson des pâtons dans les moules à pâtons (1) dans l'installation de traitement de la pâte,
- enlèvement des pâtons cuits des moules à pâtons (1),
- transfert des moules à pâtons (1) pour une nouvelle préparation de remplissage des moules à pâtons (1),
- dans lequel, depuis et y compris l'étape de préparation des moules à pâtons (1) à remplir jusqu'à la nouvelle préparation de remplissage des moules à pâtons (1), les identifications suivantes sont effectuées une fois à chaque fois :
-- identification du type de moule du moule à pâtons (1),
-- identification individuelle du moule à pâtons (1),
- dans lequel les identifications sont utilisées pour commander les stations de traitement de l'installation de traitement de la pâte, avec
- une surveillance par imagerie des moules à pâtons (1) immédiatement après le remplissage des moules à pâtons (1) et avant la fermentation des pâtons et/ou
- une surveillance par imagerie des moules à pâtons (1) immédiatement avant la fermentation des pâtons et/ou
- une surveillance par imagerie des moules à pâtons (1) immédiatement après l'enlèvement des pâtons.

2. Procédé de traitement de la pâte selon la revendication 1, **caractérisé en ce qu'**
- une identification du type de moule a lieu après la préparation et avant le remplissage des moules à pâtons (1) et/ou
- une identification du type de moule a lieu après la fermentation et avant la cuisson des pâtons et/ou
- une identification du type de moule a lieu après la cuisson et avant l'enlèvement des pâtons et/ou
- une identification du type de moule a lieu après l'enlèvement des pâtons et avant le transfert des moules à pâtons (1).

3. Procédé de traitement de la pâte selon la revendication 1 ou 2, **caractérisé en ce qu'**
une identification individuelle a lieu après le remplissage des moules à pâtons (1) et avant la fermentation des pâtons et/ou une identification individuelle a lieu après la fermentation et avant la cuisson des pâtons et/ou
une identification individuelle a lieu après l'enlèvement des pâtons et avant le transfert des moules à pâtons (1) et/ou une identification individuelle a lieu après le déchargement des moules à pâtons (1) après l'enlèvement des pâtons et/ou une identification individuelle a lieu avant l'introduction des moules à pâtons (1) dans un magasin de moules (15) duquel sont retirés les moules à pâtons (1) à remplir et dans lequel les moules à pâtons (1) sont stockés après l'enlèvement des pâtons cuits.

4. Procédé de traitement de la pâte selon l'une quelconque des revendications 1 à 3, **caractérisé en ce que** des moules à pâtons sont utilisés dont les marques d'identification (3) présentent un support (7) contenant de la céramique.

5. Procédé de traitement de la pâte selon la revendication 4, **caractérisé en ce que** l'on utilise des moules à pâton dont le support (7) présente un revêtement céramique.

6. Procédé de traitement de la pâte selon l'une quelconque des revendications 1 à 5, **caractérisé en ce que** l'on utilise des moules à pâtons dont les données d'identification (4) comprennent un code QR.

7. Installation de traitement de la pâte (10) pour la mise en œuvre d'un procédé selon l'une quelconque des revendications 1 à 6
- avec un dispositif de préparation de moules (12) pour préparer les moules à pâtons (1) à être rempli,
- avec un dispositif de remplissage (18) pour remplir les moules à pâtons (1) avec au moins un pâton préparé chacun,
- avec un dispositif de fermentation (20) pour la fermentation des pâtons dans les moules à pâtons (1),
- avec un four (28) pour cuire les pâtons dans les moules à pâtons (1),
- avec un dispositif d'enlèvement (30) pour enlever les pâtons cuits des moules à pâtons (1),
- avec un dispositif de transfert pour transférer les moules à pâtons (1) pour une nouvelle préparation de remplissage des moules à pâtons (1),
- avec au moins un dispositif de lecture de type de moule (17, 25, 29, 37) pour lire une identification de type de moule d'un moule à pâtons (1),
- avec au moins un dispositif de lecture individuelle (21, 26, 32, 36, 40) pour lire une identification individuelle des moules à pâtons (1),
- avec au moins un capteur de surveillance par imagerie (19, 22, 33) pour surveiller les moules à pâtons (1) immédiatement après le remplissage des pâtons et avant la fermentation des pâtons.

8. Installation de traitement de la pâte selon la revendication 7, **caractérisée par** une pluralité de moules à pâtons (1) destinés à recevoir au moins un pâton pendant un processus de fermentation et de cuisson, dans laquelle chacun des moules à pâtons (1) a au moins une marque d'identification (3) lisible par machine, contenant des données d'identification (4) comprenant les données de type de moule (5) et les données d'individualisation (6) uniques au moule respectif.
